Europäisches Patentamt

European Patent Office

Office européen des brevets

(19)

(11) Publication number: **0 149 918**
**A2**

(12)

# EUROPEAN PATENT APPLICATION

(21) Application number: **84308912.9**

(22) Date of filing: **19.12.84**

(51) Int. Cl.⁴: **G 01 N 1/08**

(30) Priority: **22.12.83 GB 8334179**

(43) Date of publication of application:
**31.07.85 Bulletin 85/31**

(84) Designated Contracting States:
**BE DE FR GB IT NL SE**

(71) Applicant: **COCKSEDGE & COMPANY LTD.**
**Rapier Street**
**Ipswich IP2 8HT(GB)**

(72) Inventor: **Boughey, Patrick Nelson**
**Home Cottage 24a Palmerston Road**
**Ipswich IP4 2NU(GB)**

(74) Representative: **Matthews, Howard Nicholas et al,**
**MATTHEWS HADDAN & CO Haddan House 33 Elmfield**
**Road**
**Bromley Kent BR1 1SU(GB)**

(54) **Crop sampling apparatus.**

(57) A sampling apparatus comprising a sampling tube (33) movable between a raised position and a lowered position to receive the sample, a vertical double action piston and cylinder device (24) for advancing and withdrawing the tube, means (36) for rotating the tube, and flights (102) mounted within said tube at the lower end thereof for directing the crop into the tube on rotation thereof, said flights being angularly spaced from each other about the longitudinal axis of the tube, characterized in that the shutters (101) are provided which are movable between an open position and a position to close the spaces between said flights after the required sample has entered the tube, and means (114) for moving said flights (102) between open and closed positions, whereby on rotation of the tube and said flights on movement of the tube from a raised position towards a lowered position the flights direct the crop into the tube which is thereafter closed by actuation of said shutters to their closed position.

EP 0 149 918 A2

Croydon Printing Company Ltd.

FIG.1

TITLE:   CROP SAMPLING APPARATUS.

This invention relates to sampling apparatus more especially for taking a sample from a load of crops in the form of a local vertical cross section, the apparatus including a sampling tube.

A sampling apparatus for sugar beet is known (UK Patent Specification 897,199) comprising a vertical tube, scoop plates axially movable in relation to the tube, at the lower end thereof and means for rotating the tube and moving it downwards so that beets (or other material) scooped up by the scoop plates are moved into the tube, whereupon the tube can be raised and the contents discharged by moving the scoop plates away from the end of the tube.

A further apparatus for sampling sugar beet is disclosed in Patent Specification No. 1525241, the apparatus also having a tube which can be lowered into the sample to receive the beets by means of scoops at the lower end of the tube.  The object of the invention disclosed in Patent No. 1525241 is to provide means for automatically arresting the drive applied to the tube to prevent damage to the tube which otherwise might occur in engaging the floor of the lorry containing the beets.

An apparatus for sampling sugar cane is disclosed in UK Patent Specification No. 2120207A and as in the preceding disclosures incorporates a tube and means for ejecting or permitting discharge of the sample.

An object of the present invention is to provide an improved sampling apparatus by which the tube can be closed to retain therein a sample of the crop from bulk and to permit discharge of the sample (batch) after the tube has been removed from the bulk.

According to the invention there is provided a sampling apparatus comprising a sampling tube movable between a raised position and a lowered position to receive the sample, a vertical double action piston and cylinder device for advancing and withdrawing the tube, means for rotating the tube, flights mounted within said tube at the lower end thereof for directing the crop into the tube on rotation thereof, said flights being angularly spaced from each other about the longitudinal axis of the tube, shutters movable between an open position and a position to close the spaces between said flights after the required sample has entered the tube, and means for moving said flights between the open and closed positions, whereby on rotation of the tube and said flights and on movement of the tube from a raised position towards a lowered position the flights direct the crop into the tube which is thereafter closed by actuation of said shutters to their closed position.

Preferably discharge is effected by withdrawal of the sampling tube from the bulk, moving the tube to a discharge position and lowering the flights and shutters to a position clear of the lower end of the tube.

A constructional embodiment will now be described by way of example with reference to the accompanying drawings, in which:-

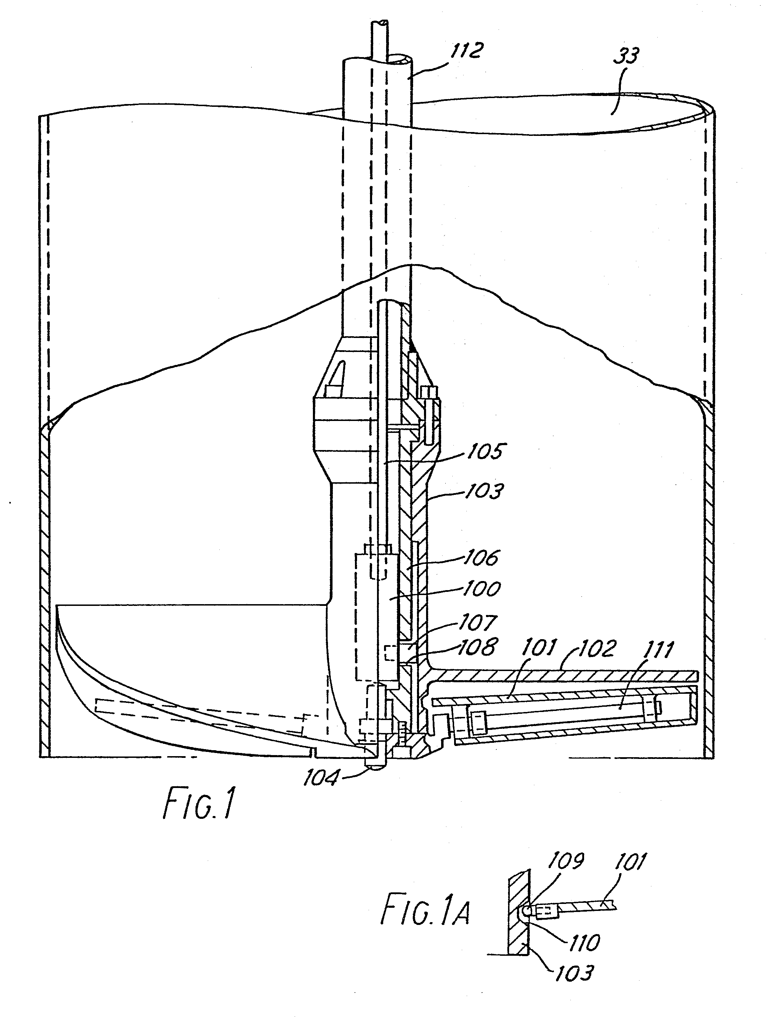

FIGURE 1 is a part longitudinal section of a sampling tube and flight assembly;

FIGURE 1a shows a detail;

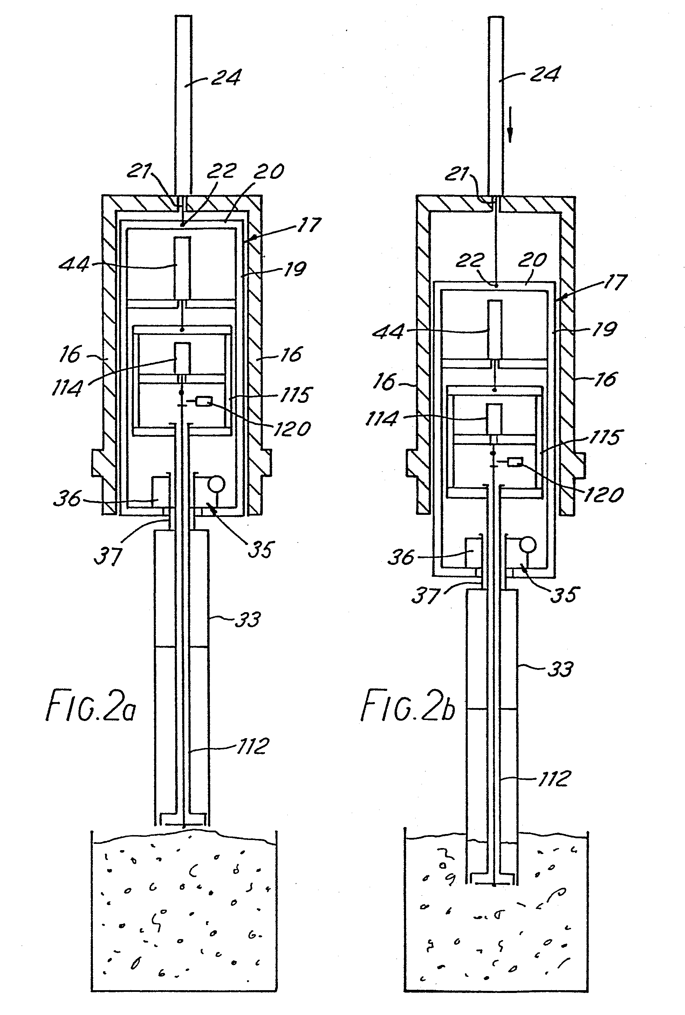

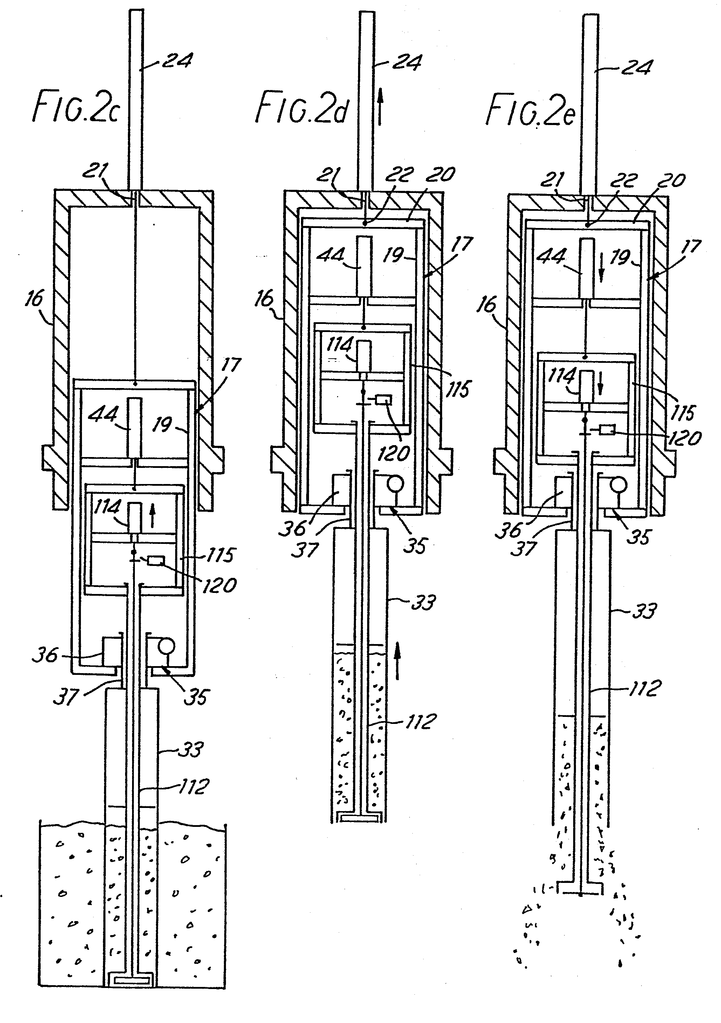

FIGURES 2a - 2e are schematic longitudinal sections of the sampling apparatus shown with the sampling tube in the rest position, initial sampling position, completed sampling position, withdrawn position and discharge positions respectively;

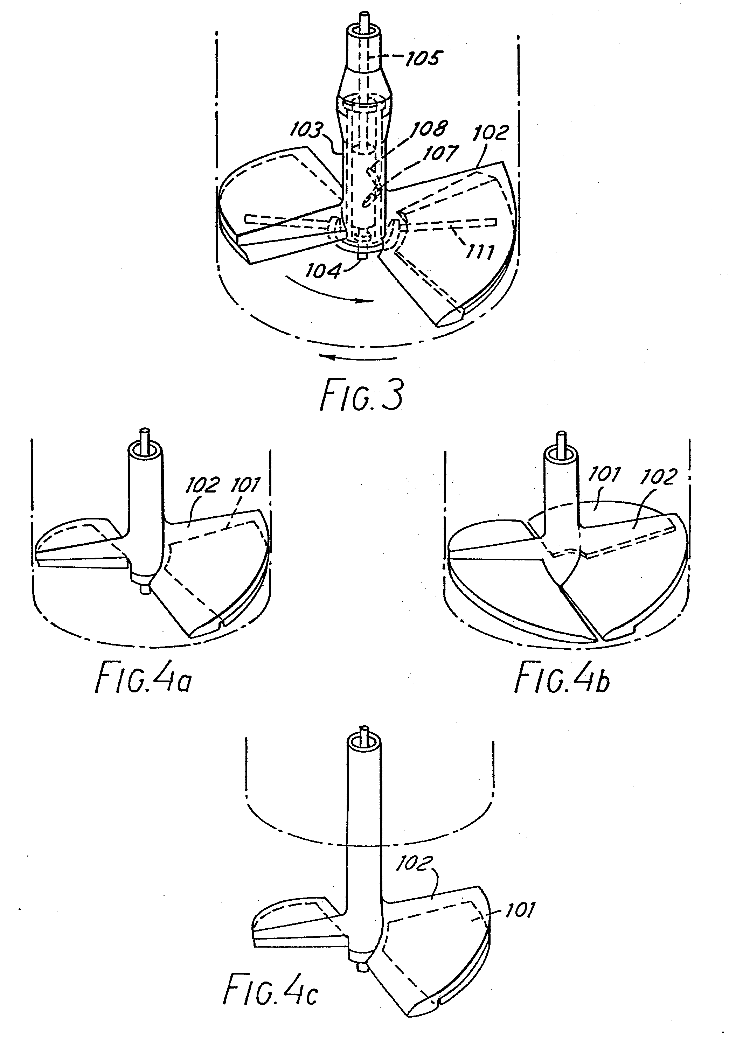

FIGURE 3 is a part perspective view of the lower end of the sampling tube showing the flights and operating mechanism for the shutters; and

FIGURE 4a - 4c show part perspective views with the shutters in the sample collection mode where the shutters are open, sample extraction mode where the shutters are closed and sample discharge mode with the shutters once again open respectively.

The apparatus shown in the present invention incorporates many constructional features described in Patent Specification Nos. 2120207A and 1525241 and for the sake of simplicity the features common to all arrangements have the same reference numbers. As in these earlier specifications the apparatus is provided with a framework which can be moved to a sampling position beneath which a lorry can be brought, whereupon a sampling tube is driven downwards into the crop contained in the lorry. The crop enters the tube whereafter the latter is raised and the framework moved laterally to a discharge position over a moving belt from which the sampled crop is discharged into a hopper.

The sampling apparatus includes a mounting arrangement of the kind shown in Specification No. 2120207A i.e. a laterally movable framework on which are mounted flange wheels which engage in guide rails of a rigid framework to position the framework sufficiently above the ground for the lorry carrying a load to be driven underneath. The framework is movable by means of a hydraulic motor which drives the wheels through the axle to move the framework laterally from a sampling position or any one of a number of sampling positions, to a discharge position. The hydraulic motor is fed from a reservoir and pump assembly mounted on the framework. These ·components are adequately shown from the earlier specifications referred to above.

Mounted on the framework are a pair of vertical rails 16 serving as guides for a vertically movable carriage 17 which has upper and lower guides engaging these rails.    The carriage 17, which is constructed of angle and channel members 19, 20, is connected at its upper end to one end of a piston rod 21 by way of a clevis connection which comprises a pin 22 which passes through an eye formed in the end of the piston rod 21 and which is engaged in apertures in the channels 20 at the top of the carriage 17.    The piston rod 21 is part of a piston and cylinder device 24, the cylinder of which is fixed to an upper member of the laterally movable framework (not shown).

At the lower end of the carriage 17 there is provided a base 26 on which is mounted the driving mechanism for a sampling tube 33, comprising an electric motor, a gear box and a worm and wheel drive 36 having a hollow output shaft 37 extending vertically downwards therefrom.    The latter is connected to the sampling tube 33 at the upper end thereof.

A central hollow support shaft 112 is carried by a rotary bearing at its upper end by an auxiliary carriage 115 movable vertically relative to the carriage 17.    To the lower end of the shaft 112 there are arranged on a sleeve 103 a pair of flights 102 diametrically opposed and so dimensioned as to provide angular spaces.    The flights are fixed in relation to the shaft 112.

Flight shutters 101 consisting of two specially contoured plates are arranged to be normally stowed (open position) beneath the fixed flights 102 inside the probe tube 33 during the sample collecting operation.

The flight shutter plates are moved to a closed position by rotation through 90 degrees in the reverse direction to normal flight rotation. Simultaneously the shutters are caused to pivot such that the trailing edge of the shutter tilts downward to align with and seal against the leading edge of the preceding fixed flight ('closed' position). The combined action and operation of the two shutters closes the apertures between the two fixed flights, closing the end of the probe tube.

In operation the probe tube 33 and fixed flights 102 rotate and descend into the load being sampled (collecting mode). When the descending tube reaches the bottom of the load a depth sensor 104 is depressed imparting a signal via a rod 105 to the automatic control (hydraulic or mechanical pressure switch) which stops the tube descending and closes the flight shutter plates 101 (sample extraction mode).

The shutter plates 101 are opened and closed by imparting a push or pull action to rod 105 by actuation of a hydraulic cylinder 114, this movement is converted to a rotary motion driving the shutter sleeve assembly 106 by a cam block 100 attached to said rod 105, a cam follower roller 107 running in a helical slot 108 in the block 100 causing the sleeve 103 and shutter assembly to rotate.

As the shutter plates rotate a follower pin 109 attached to the shutter and running in a guide groove cam 110 tilts the shutters on the pivot arms 111.

The complete flight and shutter assembly is lowered on its control support 112, clear of the probe tube, and the shutters opened when unloading the sample (sample discharge mode).

Hydraulic circuitry for the control of the movement of the sampling tube and flight cylinder may be as substantially as described in Patent Specification No. 1525241. A safety circuit may be provided to stop the downward movement or engagement of the tube with the lorry floor (e.g. switch 120). Alternatively a balanced potentiometer system of a known type may be used to ensure that damage does not occur either to the cutter or the lorry floor.

The function of the sampler unit may be semiautomatic and may be controlled by a single operator from a control station mounted adjacent to the control point. Operation of a joystick controller will traverse the unit to any required position over the vehicle. Placing the controller in the down position will start the sampling tube descending at a fast approach speed. On entering the load the controller is released and the tube continues to descend in slow speed cutting through the cane until it reaches a predetermined depth in the vehicle. The tube then automatically retracts and the unit traverses to its discharge position whereupon the rams 44 and 114 are automatically operated so that the sample is discharged into a reception hopper. The rams then return to their preload position ready for the next sample cycle.

The flights and shutters mechanism improves the performance and extends the scope of use for the sampling system by making it suitable for sampling smaller sized products e.g. potatoes, palm oil nuts and most solids of a granular nature.

The flights may be rotated independantly. of the tube so that the speed of the tube can be increased to saw or cut through the product being sampled. For sawing or cutting the tube may have an annular cutter removably mounted at the bottom end.

CLAIMS:

1. A sampling apparatus comprising a sampling tube (33) movable between a raised position and a lowered position to receive the sample, a vertical double action piston and cylinder device (24) for advancing and withdrawing the tube, means (36) for rotating the tube, and flights (102) mounted within said tube at the lower end thereof for directing the crop into the tube on rotation thereof, said flights being angularly spaced from each other about the longitudinal axis of the tube, characterized in that shutters (101) are provided which are movable between an open position and a position to close the spaces between said flights after the required sample has entered the tube, and means (114) for moving said flights (102) between open and closed positions, whereby on rotation of the tube and said flights on movement of the tube from a raised position towards a lowered position the flights direct the crop into the tube which is thereafter closed by actuation of said shutters to their closed position.

2. A sampling apparatus as claimed in Claim 1, characterized in that means (44) are provided to move said flights (102) and shutters (101) together between a withdrawn position inside the sampling tube and a position outside said sampling tube at which a sample is dischargeable.

3.    A  sampling apparatus as claimed in Claim 1 or  2, characterized in that the flight shutters (101) consist of  two contoured plates arranged to be normally stowed beneath  the  fixed  flights (102)  during  a  sampling operation.

4.    A  sampling  apparatus  as  claimed  in  Claim  3, characterized in that two of said flight shutters (101) are  provided  diametrically  opposed  to  each   other defining  angular spaces and two flight shutters  (102) movable  between  an  open  position  beneath  the  two flights  respectively  to  a closed  position  at  said angular spaces.

5.    A  sampling  apparatus  as  claimed  in  Claim  4, characterized  in  that  on movement of  said  shutters (101)  to the closed position said shutters pivot  such that  the trailing edge of each shutter tilts  downward to align with and seal against the leading edge of  the preceding flight shutter (102).

6.    A  sampling apparatus as claimed in Claim 4 or  5, characterized  in  that  the flights are mounted  on  a sleeve (106), and that said means (114) for moving said flights  (101)  between  open  and  closed   positions comprise a hydraulic cylinder (114), a rod connected thereto for axial movement on actuation of the cylinder (114), a cam block (101) attached to said rod (105) having a helical slot (108) therein, and a cam follower (107) engaging said helical slot and mounted in said sleeve, whereby downward movement of the rod is translated into a rotary movement of the sleeve and shutters.

7. A sampling apparatus as claimed in Claim 6, characterized in that the shutter plates each have a follower pin (109) which runs in a guide groove cam (110) formed in a tube supporting said flights to cause tilting of said shutters as they are rotated into the closed position.

8. A sampling apparatus as claimed in Claim 1, wherein means are provided for rotating the flights independantly of the tube, whereby the tube can be rotated at a speed in excess of the flights to effect a cutting or sawing of the product being sampled.

FIG.1

FIG.1A

FIG.2a

FIG.2b

FIG.2c

FIG.2d

FIG.2e

0149918

4/4

FIG. 3

FIG. 4a

FIG. 4b

FIG. 4c